# EUROPEAN PATENT APPLICATION

(11) **EP 4 345 050 A1**
(43) Date of publication of application: **03.04.2024**
(21) Application number: 23182222.2
(22) Date of filing: 28.06.2023
(51) Int. Cl.: B66C 13/44, B66C 15/06, B66C 23/70, B66C 23/88, G06Q 10/0639

(54) **ADAPTIVE SYSTEM FOR MOVING AN ARTICULATED ARM, IN PARTICULAR OF A LOADING CRANE**

(30) Priority: 28.09.2022 IT 202200019938
(71) Applicant: FASSI GRU S.p.A., 24021 Albino, BG (IT)
(72) Inventor: Birolini, Valentino, 24020 Cene (BG) (IT); Ceresoli, Rossano, 24020 Ranica (BG) (IT)
(74) Representative: Praxi Intellectual Property Milano

(57) **Abstract**

The present invention refers to a system for moving an articulated arm (101), comprising:
- said articulated arm (101) comprising a plurality of bodies, successively connected in order to form an open kinematic chain, and a plurality of actuators for moving said bodies;
- a user-interface device (110) configured to command the movements of the articulated arm by an operator;
- a control unit operatively connected to said actuators and said user-interface device, configured to command, responsive to commands of the operator by the user-interface device (110), said actuators according to suitable regular operative parameters so that the articulated arm performs the movements commanded by the operator. The control unit is further configured to command, responsive to commands of the operator by the user interface device (110), said actuators according to modified operative parameters if some surroundings conditions occur.

## Description

### Technical field of the invention

The present invention refers to an adaptive system for moving an articulated arm, particularly of an articulated crane, i.e. a system wherein the response of the articulated arm to the commands of an operator adapts to determined surrounding conditions. The term "articulated arm" means a system provided with a plurality of bodies successively connected to each other, forming an open kinematic chain having a plurality of degrees of freedom, translational and/or rotational, in the space.

### Prior art

Articulated cranes are usually commanded by a remote operator by a radio control. Particularly, the operator can move the same arm and handle/displace loads, also very heavy loads, by it.

However, many factors, if neglected, could cause possible dangers when the articulated crane is operated: from environmental factors (for example, weather factors, such as a strong wind) to psychophysical factors of the operator (for example, excessive tiredness or stress). All these factors could be a risk for the safety of the operator, but also for what is in proximity of the working space of the articulated crane (for example, other persons or structures).

Moreover, the articulated crane could find itself to operate in surrounding conditions different from the nominal design ones, having in this way an effective response different from the design one.

### Summary of the invention

Therefore, an object of the present invention consists of making available a system for moving an articulated arm, particularly of an articulated crane, enhancing the safety and efficiency of the articulated arm during its operation.

This and other objects are obtained by an adaptive system for moving an articulated arm according to claim 1.

Dependent claims define possible advantageous embodiments of the invention.

### Brief description of the figures

In order to have a better comprehension of the invention and appreciate the advantages thereof, some exemplifying and non-limiting embodiments thereof will be described in the following with reference to the attached figures, wherein:

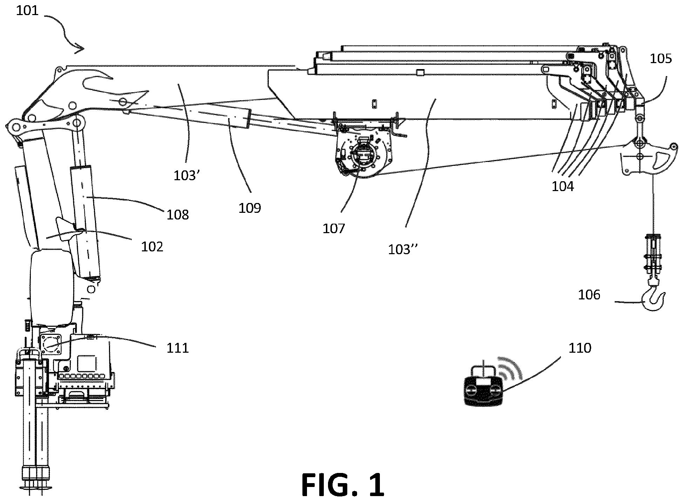

Figure 1 is a side view of an articulated crane.

### Detailed description of the invention

The present description will refer to an articulated crane only illustratively. However, the present invention finds an application in moving articulated arms of other kind, such as robot arms or elevating work platforms (EWP).

With reference to the attached Figure 1, it shows an example of a possible articulated arm, particularly of an articulated crane, for example a loading hydraulic crane (commonly known as "loader crane"), generally indicated by reference 101.

The crane 101 comprises a column 102 rotating around its axis, and one or more possibly extendable arms 103', 103". The extendibility of the arms, if provided, is obtained by a plurality of extensions 104 translatingly movable one from the other in order to modify the axial length of the respective arm. In the example of Figure 1, only the second arm 103" can be extended by moving the extensions 104. In the following description, the first arm 103', devoid of extensions, will be called "main arm", while the second arm 103", provided with extensions 104, will be called "secondary arm". The main arm 103' is rotatable with respect to the column 102, while the secondary arm 103" is rotatable with respect to the main arm 103'.

The free end 105 of the last extension of the secondary arm 103" is commonly known as end-effector. At the end-effector 105, a hook 106 movable for example by a cable winch 107, can be provided. In case of a EWP, a basket can be for example provided, while in case of robot arms tools are for example provided.

The crane 101 comprises a plurality of actuators to move the bodies which form the kinematic chain and support the relative loads. With reference to Figure 1, a first hydraulic jack 108, which moves the main arm 103' with respect to the column 102, a second hydraulic jack 109, moving the secondary arm 103" with respect to the main arm 103', and an actuator 111 for moving the column 102 with respect to a stationary reference, are visible. Of course, further actuators (not shown in the figures) are present, for example hydraulic ones, for moving the extensions 104.

In order to enable to supply and withdraw from the above-cited hydraulic actuators a working fluid, particularly a pressurized oil, the crane 101 generally comprises a hydraulic circuit. The working fluid parameters determine the operative parameters of the same crane. Particularly, the working fluid flow rate affects the kinematic magnitudes of the bodies of the articulated arm (particularly the rotation speed of the column and the translation speeds of the extensions), while the working fluid pressure affects the maximum load liftable by the same. Therefore, modifying the working fluid parameters enables to modify the operative parameters (maximum load and kinematic parameters) of the crane 101.

Of course, even though the actuators of cranes are usually of a hydraulic type, generally it is possible to provide actuators of different types (for example, electric or pneumatic actuators) in the articulated arms. Also in these cases, it is naturally possible to act on the actuators for modifying the operative parameters of the crane, particularly the kinematic magnitudes and the supportable load. For example, in case of rotative electric motors, limiting the maximum torque and angular speed of the motor consequently limit the maximum supportable load and the translation/rotation speeds of the arms. Analogous considerations are true for the pneumatic actuators, wherein limiting the pressure and gas flow rate (for example, air) consequently limits the supportable maximum load and translation/rotation speeds of arms.

According to the type of a used actuator (hydraulic, electric, or pneumatic), the crane 101 can comprise suitable sensors for detecting the working parameters of the actuators which affect the operative parameters of the crane. For example, in case of a hydraulic crane, such sensors can measure the flow rate and working fluid pressure.

Optionally, the crane 101 can comprise a plurality of sensors such to enable to determine the coordinates, for example the cartesian coordinates, of the end-effector 105 and/or the speed thereof. According to a possible embodiment, with reference to the crane 101, the plurality of sensors can comprise:
1) an angular sensor for measuring the rotation of the column 102 about its own axis, with respect to a stationary reference;
2) an angular sensor for measuring the rotation of the main arm 103'. Such rotation can be absolute, in other words refers to a stationary reference such as the horizontal, or can be relative, with respect to the column 102;
3) an angular sensor for measuring the rotation for the secondary arm 103". Such rotation can be absolute, in other words referred to a stationary reference such as the horizontal, or can be relative, with respect to the main arm 103';
4) a linear sensor for measuring the translation of the extension 104 with respect to the secondary arm 103".

For example, the sensors can comprise linear or angular encoders, magneto-strictive sensors or similar. By the signals supplied by the above indicated sensors, it is possible, by geometric relationships, to determine the absolute coordinates of the end-effector 105, or also, by a time derivative, its speed. Such information can be used for analyzing the mode of use of the crane by an operator, as it will be explained in the following.

Optionally, the crane 101 can comprise one or more sensors such to enable to determine the transported load. For example, such sensors can comprise strain gauges applied to the arms apt to measure the deformation caused by the load itself, by which it is possible to obtain the amount of the load.

The crane 101 comprises a control unit operatively connected to the actuators, for moving them, and to optional sensors, for receiving signals representative of the above-mentioned magnitudes. Moreover, a user-interface device 110 is provided connected to the control unit in order to enable an operator to move the crane and possibly to gain access to other functions. For example, the user-interface device can comprise a radio control and the control unit can comprise a transmission module for communicating with this latter (for example, a radio transmission module). The operator, by the radio control, by acting for example on a joystick, can visibly move the end-effector 105, by supplying suitable commands to the crane 101 control unit, in response to them, the control unit determines the required operative parameters of the actuators so that the articulated arm can perform the movements commanded by the operator, possibly for transporting a load. The control unit, in normal conditions, therefore, commands the actuators according to these operative parameters (in the following, these will be called "regular operative parameters").

According to the invention, the control unit is further configured to command, in response to the commands received by the operator via the radio control 110, the actuators according to operative parameters different from the regular operative parameters (in the following indicated as "modified operative parameters") if one or more surrounding particular conditions are detected. The surrounding conditions requiring commanding the actuators according to the modified operative parameters generally define possible danger conditions, wherein the articulated arm must work with different performances, generally reduced, with respect to the ones in the regular conditions. Particularly, in such conditions, the speed of the end-effector 105 (and consequently of each of the bodies of the articulated arm) and/or the maximum liftable load by the articulated arm must be decreased, in order to reduce the possible risk conditions. However, the surrounding conditions requiring commanding the actuators according to the modified operative parameters, can also define possible advantageous situations, wherein the articulated arm can operate with enhanced performances with respect to the regular conditions, in other words wherein the speed of the end-effector 105 (and also of each of the bodies of the articulated arm) and/or the maximum liftable load of the articulated arm are increased.

In the following, some possible surrounding conditions requiring commanding the actuators according to modified operative parameters will be described. In the system according to the invention, all the following surrounding conditions or only some of them, possibly combined with each other, will be considered.

### Psychophysical state of the operator

A first surrounding condition which can require to use modified operative parameters of the actuators is a particular psychophysical state of the operator, for example an excessive tiredness thereof or a stress condition thereof.

In order to detect such condition, the system can comprise one or more sensors of the operator physiological parameters, representative for example of stress and/or tiredness, connected to the control unit, which is configured to command the actuators according to the modified operative parameters if at least one of the detected physiological parameters goes above or below a predetermined threshold value instantaneously or for at least a predetermined reference time.

Illustratively, the physiological parameters which can be detected comprise one or more among:
- heart rate: the detection of a moderately accelerated heart rate for a prolonged period of time, or the instantaneous detection of an excessively accelerated heart rate can be symptoms of a disorder of the operator or also of an in-progress ailment. In the same way, a too slow heart rate can be a symptom of an in-progress or impending sickness;
- blink eye: an accelerated blink eye frequency for a determined time can be representative of sight reduction or sleepiness;
- breathing rate: an accelerated breathing rate for a predetermined time can be representative of an anxiety state or of an in-progress or impending ailment. In the same way, a too slow breathing rate can be also a symptom of an in-progress of impending sickness;
- temperature: a body temperature greater than normal values can be representative of an in-progress illness or of a prolonged sun exposure, which can cause disorders or attention drops. Analogously, a too low temperature could be indicative of an ailment, for example of a sign of freezing;
- oxygen saturation: too low oxygen saturation values could indicate an impeding loss of consciousness or reduced psychomotor ability of the operator;
- muscle contraction: a high level of the muscle contraction for a prolonged period of time can be a symptom of a condition of anxiety of the operator.

The above-cited physiologic parameters can be detected by suitable sensors to be applied to the operator, which can be for example included in wearable devices, such as:
- smart glasses
- sensorized glasses
- sensorized jackets
- smart watches
- sensorized gloves
- sensorized helmets
- generally, any type of "wearable" device.

It is observed that the threshold values of the physiological parameters can be different from an operator to another. For example, some healthy persons have a body temperature or a heart rate higher than the ones of other persons which are also healthy. Therefore, it is possible to store in a memory module of the control unit specific and different threshold values for each operator, which will be required to identify to the system before starting to operate the crane. To this purpose, the system can comprise user identification means. For example, the user can identify himself/herself by the radio control 110 by inserting univocal identifying data (such as for example a username and a password, or by more complicated multi-level identification systems). Optionally, the user can be acknowledged by biometric sensors, for example by fingerprint recognition or facial recognition or eye recognition. The biometric sensors can be included in the radio control, in one of the beforehand cited wearable devices, or in a cellphone or smartphone of the user, in which an identification application can be loaded, connected to the crane control unit by the cellphone/smartphone itself, for example via a Bluetooth^{®} connection and/or a Wi-Fi network.

### Danger condition for the operator

A further surrounding condition which could require the use of modified operative parameters, particularly the reduced ones, in the actuators, is a danger condition for the operator.

A possible danger condition for the operator can be his/her position, for example with respect to the crane itself.

In order to be capable to detect such condition, the system can comprise one or more sensors apt to detect the position of the operator, connected to the control unit, which is configured to command the actuators according to the modified operative parameters if a sensor detects a dangerous position for the operator.

The operator position detected by the sensors can be an absolute position, for example detectable by a GPS sensor (which could be incorporated for example in one of the beforehand cited wearable devices, or in the cellphone/smartphone of the same operator) and the operator position can be considered dangerous for example if the GPS-detected coordinates fall inside a predefined danger area.

Alternatively, the position sensors can be suitable to detect an operator position relative to any other element, such as the crane itself. For example, such sensors can include proximity sensors (for example, infrared sensors) and the operator position can be considered dangerous if the measured relative distance is less than a predetermined threshold value (therefore, in this case, the predefined danger area will be movable).

A further possible danger condition for the operator can be his/her crushing due to for example the load or part of the load transported by the crane, for example in case of an accidental drop.

In order to detect such condition, the system can comprise one or more sensors apt to detect a crushing condition of the operator, connected to the control unit, which is configured to command the actuators according to the modified operative parameters, particularly reduced, if one or more of said sensors detect a crushing condition of the operator.

The crushing condition of the operator can be detected for example by pressure sensors worn by the operator (for example, embedded in a sensorized jacket) and the crushing can be determined if the pressure detected by at least one of the pressure sensors exceeds a predetermined threshold value.

Alternatively, the crushing sensors can comprise vision systems, such as a video camera, by the images thereof the control unit is capable of determining if the operator is in a crushing condition.

### Time of use of the crane by the same user

A further surrounding condition which can require the application of the modified operative parameters of the actuators is when a predetermined time limit of (possibly discontinuous) use, for example during a same day, is exceeded by the same user. A too prolonged use of the crane by a same operator can indeed imply tiredness of the same operator.

To this purpose, the control unit can comprise a counter which tracks the time in which a specific operator has used the crane.

Possibly, the counter can be zeroed in some circumstances, and therefore the calculated time can return below the predetermined time limit of use, for example upon a suitably long pause of the operator.

In order to determine a specific operator in order to calculate the time of use and therefore in order to not sum times of use of different operators, the beforehand cited user identification means can be used.

### Time trend of the commands imparted to the crane by the user

A further surrounding condition identifying a sub-optimal state of an operator (tiredness or also lack of ability to operate the crane) and which can require to use modified operative parameters, particularly reduced, of the actuators, is the detection that, from a predefined time instant (for example, during the above-defined time of use), at least during certain intervals of time having a predetermined amplitude, the movements of the bodies of the crane arm and/or the trend of the lifted load (these magnitudes being detectable by the sensors of the actuators and/or by the arm sensors, according to what was beforehand said) exhibit a trend representative of an improper use of the crane.

The data analysis from the sensors in order to determine an improper use of the crane can be performed according to different less or more restrictive criteria.

For example, the following can be indicative of an improper use of the crane by the user:
- a number of corrections to the trajectory of the end-effector 105 greater than a predetermined threshold value in a predetermined interval of time, detectable for example by sensing an oscillating trend of the absolute or relative coordinates of the end-effector 105;
- a number of inversions of the maneuvers greater than a predetermined threshold number in a predetermined interval of time, detectable for example by sensing continuous inversions of the speeds of the actuators;
- a number of oscillations of the value of the transported load, greater than a predetermined threshold number in a predetermined interval of time, for example indicating the operator was not capable of gripping stably the load and therefore he/she released and gripped it more than one time.

However, an improper use can be also represented by too slow commands of the operator, and, in this case, the control unit can command the actuators according to modified increased operative parameters, by for example increasing the speeds of the arms with respect to the real commands of the operator.

According to an embodiment, the system comprises an indicator, for example placed on the radio control 110, apt to supply to the operator indications about his/her modes of use of the crane. For example, such indicator can supply a numeral or visual indication (for example, by colors representative of the way of using the crane) varying as the improper maneuvers of the user are gradually detected, so that he/she can become aware of his/her behaviour and, if possible, he/she will be able to modify it.

### Brightness of the working space of the crane

A further condition which can require the use of modified operative parameters, particularly reduced, of the actuators, is an insufficient or excessive level of brightness in the environment where the operator operates the crane. Such condition can occur, for example, at dawn and at sunset or in determined hours of the day particularly in the sunny ones.

The system can therefore comprise a clock connected to the control unit, which is configured to command the actuators according to the modified operative parameters in certain predefined time bands. For example, such predefined time bands can be comprised between the time at which the sun declines and the time of the following day when the sun raises, and the band about midday, wherein the lighting is at its peak.

As an alternative or in addition to, the system can comprise a sensor apt to detect the brightness of the working space connected to the control unit, which is configured to command the actuators according to the modified operative parameters if the detected brightness is less than a first predetermined brightness threshold value or greater than a second predetermined threshold value. In this way, it is possible to detect sharp declines or excesses of brightness, possibly outside the predetermined time bands, for example in case of extreme cloudiness.

Also in this case, the brightness threshold values can also indicate brightness levels at which the actuators can be commanded according to increased operative parameters, for example in case of a particularly favorable brightness, which possibly can be also predetermined in certain preset time bands.

### Weather conditions of the working space of the crane

A further condition which could require the use of modified operative parameters of the actuators are particular weather conditions of the environment where the operator operates the crane. Such condition can occur for example in case of strong winds.

Therefore, the system can comprise a sensor apt to detect weather parameters (for example, an anemometer for measuring the wind speed) connected to the control unit, which is configured to command the actuators according to the modified operative parameters if weather parameters not falling in predefined intervals are detected (for example, a wind speed greater than a predefined maximum speed).

As an alternative or in addition to, the weather parameters can be determined based on the forecasts of a weather application installed on the control unit or on the beforehand cited cellphone/smartphone of the operator connected to the control unit. Such application, besides the wind speed, can supply further information about the weather conditions, such as for example the presence of heavy rain or of a storm: conditions which could require the actuators to be commanded according to the modified operative parameters.

It is observed that the weather conditions which cause the actuators to be commanded according to the modified operative parameters are not necessarily disadvantageous, but could be advantageous and in this case, the modified operative parameters could be increased instead of being reduced with respect to the regular operative parameters. For example, in case of a wind having a speed less than the nominal design wind speed, it is possible to command the crane so that it has a better performance (for example, because the arms move at a greater speed) than the one at the regular operative conditions.

According to a possible embodiment, the evaluation of each of the above-listed surrounding conditions for commanding the actuators according to the modified operative parameters can be disabled when needed.

According to an embodiment, whenever the command of the actuators according to the modified operative parameters is enabled when a predetermined certain threshold value is exceeded, among the beforehand cited ones, it is possible to provide, for the same considered magnitude, a plurality of predetermined threshold values which are correspondent to different modified operative parameters of the actuators. For example, a threshold value can be provided at which the actuators are commanded in a regular mode, proximate to the threshold value at which the modified mode command of the actuators is triggered, the operator can be informed about this last condition, for example, by suitable indicators on the radio control 110. As an alternative or in addition to, a predetermined threshold value can be provided more critical than the one at which it is triggered the command switching the actuators in the modified mode, wherein the actuators are completely stopped by the control unit, in other words it is no more possible to move the crane. In other words, the modified operative parameters of the actuators are scalable in function of the detected surrounding condition, and the farther from the regular operative parameters they are, the more critical the surrounding conditions are.

According to an embodiment, the system comprises acoustic and/or light warnings, for example placed on the radio control, and connected to the control unit, which are actuated when at least one condition requiring to command the actuators according to the modified operative parameters occurs. In this way, the operator is informed about the occurred condition.

In an embodiment, the control unit is configured to automatically restore the command of the actuators according to regular operative parameters if the condition or the conditions determining the command of the actuators according to the modified operative parameters disappear.

In an embodiment, the operator can supply to the control unit, for example by the radio control, a "reset" instruction when a predetermined threshold value is exceeded entailing the command of the actuators according to the modified operative parameters, in order to restore the command of the actuators in a regular mode. Preferably, such possibility is available only for some of the surrounding conditions and not for other. For example, the operator can supply reset instructions in case of adverse detected weather conditions, but he/she is not enabled to do the same if he/she is detected with an in-progress or impending ailment.

In an embodiment, the control unit comprises a memory module storing all the situations at which a condition activating the command of the actuators in a modified mode occurs. Preferably, the control unit further comprises a transmission module capable of transmitting such stored information to an external control unit, for example to a remote operative central unit. The transmission can for example occur via an Internet network using a data cell connection or a Wi-Fi network.

It is observed that, in the present description and in the attached claims, the control unit and also the elements indicated by the term "module", can be implemented by hardware devices (for example, central units) by software or by a combination of hardware and software.

A person skilled in the art in order to meet specific contingent needs can introduce many additions, modifications, or substitutions of elements with other operatively equivalent ones, to the described embodiments of the adaptive system for moving an articulated arm without falling out of the scope of the attached claims.

## Claims

1. System for moving an articulated arm (101), comprising:
- said articulated arm (101), comprising a plurality of bodies, successively connected in order to form an open kinematic chain, and a plurality of actuators for moving said bodies;
- a user-interface device (110) configured to command the movements of the articulated arm by an operator;
- a control unit operatively connected to said actuators and said user-interface device, configured to command, responsive to commands of the operator by the user-interface device (110), said actuators according to regular operative parameters suitable for the articulated arm to perform the movements commanded by the operator,
wherein the system further comprises:
a) one or more operator physiologic parameter sensors, connected to the control unit,
and wherein said control unit is further configured to command, responsive to the commands of the operator by the user-interface device (110), said actuators according to modified operative parameters different from the regular operative parameters, if:
a) at least one of the physiologic parameters detected by the one or more physiologic parameter sensors, instantaneously or in a predetermined reference time, is in excess of or goes below a predetermined threshold value,
wherein said regular and modified operative parameters of the actuators are correlated to the speed of the bodies of the articulated arm and/or to the maximum load liftable by the articulated arm, wherein to the modified operative parameters correspond speeds of the bodies of the articulated arm and/or a maximum load liftable by the articulated arm less than the speeds of the bodies of the articulated arm and the maximum load liftable by the articulated arm corresponding to the regular operative parameters.

2. System according to the preceding claim, wherein said actuators comprise hydraulic actuators operating by a pressurized working fluid and said regular and modified operative parameters comprise flow rate and pressure of said working fluid.

3. System according to any of the preceding claims, wherein said physiologic parameters of the operator comprise one or more of: heart rate, eye blink frequency, breathing rate, body temperature, oxygen saturation, muscle contraction.

4. System according to any of the preceding claims, wherein said physiologic parameter sensors are comprised in one or more devices wearable by the operator, selected in the group consisting of: smart glasses, sensorized glasses, sensorized jackets, smart watches, sensorized gloves, sensorized helmets.

5. System according to any of the preceding claims, wherein said predetermined threshold values of the physiologic parameters of the operator are specific to different operators, said control unit comprising a memory module for storing said predetermined threshold values of the physiologic parameters specific to different operators and being configured to identify and distinguish the different operators.

6. System according to any of the preceding claims, further comprising one or more of:
b) one or more sensors apt to detect a position of the operator, connected to the control unit;
c) one or more sensors apt to detect a crushing condition of the operator, connected to the control unit;
d) a counter connected to or comprised in the control unit, configured to measure a time in which the operator commands the articulated arm;
e) one or more sensors for determining kinematic magnitudes of the bodies of the articulated arm and/or one or more sensors for determining the load lifted by the articulated arm, connected to the control unit;
f) a device apt to determine a brightness level of the working space where the articulated arm is located, connected to the control unit;
g) a device apt to determine weather conditions of the working space where the articulated arm is located, connected to the control unit,
and wherein said control unit is further configured to command, responsive to the commands of the operator by the user-interface device (110), said actuators according to said modified operative parameters if:
b) the position of the operator detected by the one or more operator position sensors falls within a predetermined danger area; and/or
c) said one or more crushing sensors detect a crushing condition of the operator; and/or
d) said counter detects a command time of the articulated arm by the operator greater than a predetermined limit command time; and/or
e) in a predetermined reference time interval, the kinematic magnitudes of the bodies of the articulated arm and/or the lifted load detected by the one or more sensors for determining the kinematic magnitudes of the bodies of the articulated arm and/or by the one or more sensors for determining the load lifted by the articulated arm have a trend representative of an improper use of the articulated arm by the operator; and/or
f) the device for determining the brightness level of the working space determines a brightness of the working space less than a first predetermined brightness threshold value or greater than a second predetermined brightness threshold value; and/or
g) the device for determining the weather conditions of the working space determines specific weather conditions.

7. System according to the preceding claim, wherein said predetermined limit command time is specific to different operators, said control unit comprising a memory module in which said predetermined command limit times specific to different operators are stored and being configured to identify and distinguish the different operators.

8. System according to any of the preceding claims, comprising biometric sensors connected to the control unit for identifying the operator by detecting the biometric characteristics.

9. System according to any of claims 6-8, wherein said one or more position sensors comprise absolute or relative position sensors and are selected in the group consisting of: GPS sensors, proximity sensors.

10. System according to any of claims 6-9, wherein said one or more crushing sensors comprise pressure sensors applicable to the operator and/or vision sensors capable of recognizing a crushing condition of the operator based on an analysis of the detected images.

11. System according to any of claims 6-10, wherein the control unit is configured to determine said improper use of the articulated arm by the operator if in the predetermined reference time interval:
- a number of inversions of the kinematic magnitudes of the bodies of the articulated arm greater than a predetermined threshold number is detected, and/or
- a number of oscillations of the value of the transported load greater than a predetermined threshold number is detected.

12. System according to any of claims 6-11, wherein the device for determining the brightness level of the working space comprises one or more of:
- a clock, wherein the control unit is configured to determine a brightness level of the working space less than the first predetermined brightness threshold value or greater than the second predetermined brightness threshold value in one or more predefined time bands;
- a brightness sensor of the working space connected to the control unit.

13. System according to any of claims 6-12, wherein the device for determining the weather conditions of the working space comprises one or more of:
- an anemometer connected to the control unit, wherein the control unit is configured to determine a specific weather condition if the wind speed measured by the anemometer is in excess of or goes below a second predetermined threshold speed;
- a weather forecast application configured to supply a plurality of weather parameters of the working space to the control unit.

14. System according to any of the preceding claims, wherein said control unit is configured to command, responsive to commands from the operator by the user-interface device (110), said actuators according to a plurality of modified operative parameters different from the regular operative parameters.

15. System according to any of the preceding claims, wherein said control unit is further configured to reset the command of said actuators according to regular operative parameters if:
a) at least one of the physiologic parameters detected by the one or more physiologic parameter sensors returns, instantaneously or for a predetermined reference time, below or above said predetermined threshold value; and/or
b) the operator position detected by the one or more operator position sensors exits the predetermined danger area; and/or
c) said one or more crushing sensors stop detecting an operator crushing condition; and/or
d) said counter detects that the command time of the articulated arm by the operator returns below a predetermined limit command time; and/or
e) in a predetermined reference time interval, the kinematic magnitudes of the bodies of the articulated arm and/or the lifted load detected by the one or more sensors for determining the kinematic magnitudes of the bodies of the articulated arm and/or by the one or more sensors for determining the load lifted by the articulated arm have a trend representative of a not-improper use of the articulated arm by the operator; and/or
f) the device for determining the brightness level of the working space determines a brightness of the working space greater than the first predetermined threshold brightness value or less than the second predetermined threshold brightness value; and/or
g) the device for determining the weather conditions of the working space determines weather conditions different from said specific weather conditions.
